Europäisches Patentamt

European Patent Office

Office européen des brevets

(19)

(11) **EP 1 125 900 A1**

(12) **EUROPEAN PATENT APPLICATION**

(43) Date of publication:
 **22.08.2001 Bulletin 2001/34**

(51) Int Cl.7: **C03C 3/095**, C03C 21/00

(21) Application number: **01301153.1**

(22) Date of filing: **09.02.2001**

(84) Designated Contracting States:
 **AT BE CH CY DE DK ES FI FR GB GR IE IT LI LU MC NL PT SE TR**
 Designated Extension States:
 **AL LT LV MK RO SI**

(30) Priority: **10.02.2000 JP 2000033748**
 **17.08.2000 JP 2000247443**

(71) Applicants:
 • **SONY CORPORATION**
 **Tokyo (JP)**
 • **HOYA CORPORATION**
 **Shinjuku-ku Tokyo (JP)**

(72) Inventors:
 • **Santoku, Masataka**
 **Shinagawa-ku, Tokyo (JP)**

 • **Kuramoto, Fumio**
 **Shinagawa-ku, Tokyo (JP)**
 • **Okada, Masamichi**
 **Shinagawa-ku, Tokyo (JP)**
 • **Hachitani, Yoichi**
 **Shinjuku-ku, Tokyo (JP)**
 • **Watanabe, Itaru**
 **Shinjuku-ku, Tokyo (JP)**

(74) Representative: **Ayers, Martyn Lewis Stanley**
 **J.A. KEMP & CO.,**
 **14 South Square,**
 **Gray's Inn**
 **London WC1R 5JJ (GB)**

(54) **Glass panel for cathode ray tube, cathode ray tube employing this glass panel and method for producing cathode ray tube**

(57)    A CRT in its entirety is to be rendered light-weight without detracting from the resistance against pressure of a panel or from characteristics desirable for the CRT. To this end, there is provided a glass panel for a CRT obtained on chemically reinforcing the glass containing 57 to 64 wt% of $SiO_2$, 0.1 to 4 wt% of $Al_2O_3$, 5 to 10 wt% of $Na_2O$, 5 to 10 wt% of $K_2O$, 7 to 13 wt% of SrO, 7 to 11 wt% of BaO, 0.1 to 2 wt% of $TiO_2$, 0.1 to 4 wt% of $ZrO_2$ and 0.01 to 1 wt% of $CeO_2$.

REFERENCE
STRIPES

GLASS
SURFACE

d

CURVED
STRIPES

**FIG.2**

EP 1 125 900 A1

**Description**

This invention relates to a glass panel for a cathode ray tube illuminated by an electron beam, a cathode ray tube employing the glass panel, and a method for producing the cathode ray tube.

Description of Related Art

Recently, a TV monitor screen size is becoming larger and, in keeping pace therewith, the tendency towards an increased weight of a cathode ray tube (CRT) is becoming outstanding. The main factor contributing to the increased weight of a CRT set is the weight of glass, with the weight of glass components accounting for approximately 60% of the total weight of the CRT. The glass components for a CRT are roughly comprised of a panel for projecting an image thereon, a funnel on the back surface and a neck of an electron gun. The major portion of the weight of glass is taken up by the panel portion.

For example, the thickness of a 36-inch CRT panel is not less than 20 mm, with the weight thereof being approximately 40 kg. The total weight of the TV set is on the order of 40 kg. So, a TV set with a large screen size is difficult to install especially in view of constraints of our housing environment. Moreover, the CRT of such heavy weight is difficult to transport and needs considerable energy and cost.

As routine glass for CRT, such glass containing PbO, SrO or BaO in larger proportions is used. For example, the Japanese Laying-Open Patent H-59-27729 discloses a faceplate for a CRT formed of glass containing BaO, SrO and $ZrO_2$.

However, the glass of this sort has a bending strength of the order of 50 MPa, as a measured value. Thus, in order to realize a strength sufficient to withstand atmospheric pressure, the glass needs to be increased in thickness, so that, if a demand for an increased screen size is to be coped with, glass needs to be increased significantly in thickness and hence in weight. Moreover, if the glass surface is grazed or scored, the bending strength is appreciably lowered even to a value as low as 25 to 30 MPa.

Recently, a flat type CRT, a panel portion of which is fabricated from flat glass, has been marketed. For employing the flat type glass for a CRT the inner space of which is kept at a vacuum, a glass strength sufficient to bear the atmospheric pressure by its flat surface is required. With his in mind, such a method employing reinforced glass, reinforced on air cooling, referred to below simply as physically reinforced glass, has come to be used.

However, physical reinforcement is applied preferentially to a thicker glass plate. That is, a high strength is difficult to realize with a thin glass plate. So, the CRT employing the physically reinforced glass has a thicker glass thickness in the panel portion, thus realizing, in reality, only poor weight decreasing effect.

In addition, in a manufacturing process for a Braun tube, a processing of heating to 400° to 450°C for frit sealing is required. At this time, the physically reinforced glass tends to be relaxed in stress distortion to bring about a lowered strength. So, the glass strength is on the order of 100 MPa, in many cases, to render it difficult to realize the light weight.

On the other hand, attempts have been made to use ion exchange glass as a panel glass with a view to preventing coloration (browning) of a panel glass. For example, there is disclosed in Japanese Laying-Open Patent S-50-105705 a method for the preparation of glass illuminated by electron rays, wherein at least one of potassium, rubidium, cesium or hydrogen is substituted for lithium or sodium existing in a surface layer of glass illuminated by the electron rays.

In the Japanese Patent Publication H-7-108797, there is disclosed a glass panel in which potassium and lithium ions are substituted for sodium ions on at least the surface of a panel of soda lime silica glass illuminated by electron rays.

Moreover, in the Japanese Patent Publication H-7-42140, there is disclosed chemically reinforced glass for a CRT in which chemically reinforced glass containing not less than 65% of $Na_2O$ calculated as total alkali oxides is used and in which sodium ions in the glass are ion-exchanged with potassium ions.

The techniques for chemically reinforcing the surface of a glass panel for CRT are disclosed in Japanese Laying-Open Patent H-1-319232 and in Japanese Patent No.2904067.

However, the techniques disclosed in Japanese Laying-Open Patent H-50-105707, Japanese Patent Publications 7-108797 and 7-42140 are intended for coping with browning, while it is notpossible with these techniques to improve the strength against damages or bending.

Moreover, with the technique disclosed in Japanese Patent Publication 7-42140, $Na_2O$ is contained in the glass in an amount not less than 65% of $Na_2O$ of total alkali oxides, so that the glass exhibits a large thermal expansion coefficient and hence poses a problem as to resistance against devitrification or chemical durability.

On the other hand, in the technique disclosed in the Japanese Patent 2837005, in view of improving the strength in the chemically reinforced glass, the depth of the compression stress layer is as deep as 200 to 260 $\mu$m and the strength against bending fracture is as high as 82 to 98 $kg/mm^2$, a sufficient strength can be realized even against a deep crack.

However, these known techniques fail to take countermeasures against certain properties of a glass panel for a CRT, for example, against browning, so that the glass cannot directly be used fo a CRT.

In the techniques for chemically reinforcing the surface of the glass panel for a CRT, such as those disclosed in Japanese Laying-Open Patent H-1-319232 or Patent 2904067, the stress distortion layer formed on ion exchange is not more than 50 μm from the surface, so that, if the glass surface is scarred, the flaw reaches the main portion of or even pierces the stress distortion layer. The result is that a sufficient strength against scars of the glass panel for a CRT cannot be achieved to render it difficult to realize a glass panel for a large-sized flat CRT of a sufficient thin thickness and a small weight.

It is therefore an object of the present invention to provide a glass panel for a cathode ray tube which is free from the above-mentioned defects.

In one aspect, the present invention provides a glass panel for a cathode ray tube produced on chemically reinforcing glass containing 57 to 64 wt% of $SiO_2$, 0.1 to 4 wt% of $Al_2O_3$, 5 to 10 wt% of $Na_2O$, 5 to 10 wt% of $K_2O$, 7 to 13 wt% of SrO, 7 to 11 wt% of BaO, 0.1 to 2 wt% of $TiO_2$, 0.1 to 4 wt% of $ZrO_2$ and 0.01 to 1 wt% of $CeO_2$. In another aspect, the present invention provides a cathode ray tube employing such glass panel.

In yet another aspect, the present invention provides a method for producing a cathode ray tube comprising the steps of constructing a glass panel for a cathode ray tube, mounting a jig for mounting an internal member on the glass panel and subsequently chemically reinforcing the glass panel.

The present invention provides a glass panel for a cathode ray tube which is able to combat browning satisfactorily and which has a deep stress distortion layer by chemical reinforcement to assure a sufficient strength as the glass panel for the cathode ray tube.

According to the glass panel for a cathode ray tube according to the present invention, the glass panel can be reduced in thickness without lowering the pressure resistance of the panel, thereby significantly reducing the weight of the panel. Moreover, resistant properties of the glass in the heat treatment step in e.g., the heat treatment step such as frit sealing step can be improved to improve the productivity. In addition, with the use of the glass panel for a cathode ray tube, a cathode ray tube may be provided which is reduced in weight without lowering the pressure resistance. Also, with the manufacturing method for a cathode ray tube according to the present invention, such a cathode ray tube may be produced which is not deteriorated in surface strength even through a heat treatment step. In particular, the present invention can be applied with marked effects to a large sized flat type cathode ray tube.

The invention will now be described by way of example only with reference to the following drawings in which:

Fig. 1 illustrates an Example of the present invention and a Comparative Example.
Fig. 2 shows the results of observation by a Babinet compensator method.

Referring to the drawings, preferred embodiments of according to the present invention will be explained in detail.

Embodiment of the Invention

An embodiment of the present invention is explained in detail. The main feature of a glass panel for CRT according to the preferred embodiment of the present invention resides in that desired characteristics can be realized, mainly with a view to reducing the weight of a CRT, despite its reduced thickness.

The glass panel for a CRT according to the preferred embodiment of the present invention is produced on chemically reinforcing glass containing 57 to 64 wt% of $SiO_2$, 0.1 to 4 wt% of $Al_2O_3$, 5 to 10 wt% of $Na_2O$, 5 to 10 wt% of $K_2O$, 7 to 13 wt% of SrO, 7 to 11 wt% of BaO, 0.1 to 2 wt% of $TiO_2$, 0.1 to 4 wt% of $ZrO_2$ and 0.01 to 1 wt% of $CeO_2$. This chemical reinforcement is by surface ion-exchanging.

The glass panel for a CRT according to the present embodiment is explained in detail. According to the present embodiment, a glass panel having an X-ray absorption coefficient of not less than 28 cm$^{-1}$ and exhibiting a suppressed browning can be manufactured with the above-mentioned glass composition. The thermal expansion coefficient may be made equivalent to that of a conventional funnel to enable flat seals of high reliability to be produced. Moreover, facilitated press molding is rendered possible to produce a large size panel of a complex shape.

Moreover, in the glass panel for a CRT of the present embodiment, since the stress distortion layer by ion exchange can be formed to approximately 150 μm. So, even if the glass surface is scarred, the resulting flaw is not allowed to pierce the stress distortion layer. That is, the scar applied to the glass surface is usually not larger than 50 μm, even if it is large, so that, by forming the stress distortion layer exceeding 50 μm, as in the present embodiment, the stress distortion layer is not pierced by usual scars. It is therefore possible to realize weight reduction by reducing the thickness of the CRT panel without deteriorating its pressure resistance.

Moreover, since the stress distortion layer is formed by ion exchange, the glass is not lowered in strength, when heating-processing the glass, in contradistinction to the physically reinforced glass. So, a sufficient strength as the glass panel for a CRT may be maintained without causing the lowering in strength even if the glass is subjected to heat treatment process such as a frit sealing process. Thus, the glas panel for the CRT can be reduced in thickness to reduce the weight of the entire CRT.

Moreover, in the glass panel for the CRT according to the present embodiment, the ratio of $Na_2O_3$ in the alkali oxides of the composition is reduced to less than 65%. This enables the glass superior in resistance against devitrification or chemical durability without excessively increasing the thermal expansion coefficient.

As a result, a large-sized CRT panel can be readily press-molded, while the thermal expansion coefficient can be matched to that of the funnel, thus suppressing peeling or cracking at the time of interconnection.

In addition, since the ratio of sodium content is suppressed, it is possible to suppress migration of sodium ions in the glass. In particular, it is possible to prevent voltage leakage due to sodium ion diffusion on the frit sealing surface, thus enabling a CRT having superior reliability and durability to be produced with improved production efficiency.

The glass panel for the CRT of the present embodiment may contain at least one oxide selected from the group consisting of MgO, CaO, ZnO, $Sb_2O_3$, NiO and $Co_2O_3$, in additon to the above components. By optionally adding these components, it is possible to provide for facilitated manufacture of glass or adjust its properties, such as by improving its melting properties or adjusting its X-ray absorption coefficient, thermal expansion coefficient, clarificatoin or transmission factor.

The glass panel for the CRT of the present embodiment has a bending strength not lower than 200 MPa. By making the bending strength of the glass panel for the CRT to be not less than 200 MPa, as compared to the bending strength of the conventional glass panel for the CRT, the glass thickness can be thinner by approximately 30%. That is, a glass panel for a CRT, when assembled as a CRT set, is required to have a thickness and a bending strength to withstand the atmospheric pressure. In general, the following relation:

$$\text{thickness } 1/\sqrt{strength}$$

needs to be met.

So, if the strength is low, the thickness is increased to lead to the increased weight of the CRT set. If the bending strength of the glass panel for the CRT is more than 200 MPa, for example, 300 MPa, the thickness of a glass panel for a 36-inch CRT, which so far needs to be 20 mm, can be reduced to approximately 9 mm. By reducing the thickness of the glass panel in this manner, it is possible to reduce the weight of the glass panel for the CRT, that is to reduce the overall weight of the CRT.

Since the glass panel for the CRT can be reduced, the temperature differential between the inside and the surface of the panel can be reduced, even if an abrupt temperature differential is caused in the panel in the process of bonding the panel and the funnel by the frit seal glass, thus enabling the stress distortion to be reduced. As a result, such a panel may be provided which is not liable to be destroyed even if an acute temperature differential is produced in the panel during the frit sealing process. That is, the routine heating or cooling speed can be raised in the frit sealing process, thereby improving productivity of the CRT.

It is noted that the glass panel fort the CRT of the present embodiment has a thermal expansion coefficient at 30° to 300°C of 95 to 105×$10^{-7}$/°C. So, the thermal expansion coefficient can be matched to that of the conventional funnel, so that it is possible to suppress peeling of the connecting portion or cracking to realize the connection with high reliability. Moreover, the CRT can be reduced in weight without modifying the manufacturing process or other materials, such as funnels or necks.

The chemically reinforced glass, in which a stress distortion layer is formed by ion exchange, can be of a high strength even if it is in the form of a thin plate. In contradistinction from a physically reinforced glass, the chemically reinforced glass is not susceptible to deterioration in strength ascribable to heat treatment, such that it is not lowered appreciably in strength even after the frit sealing process.

The glass panel for the CRT of the present embodiment has a bending strength not less than twice that of the non-reinforced glass. In this manner, the panel of the CRT can be reduced appreciably in thickness to realize the light weight. Moreover, since the panel can be thinner in thickness for the same strength, and hence the panel is superior in resistance against thermal shock, while the heating or cooling speed can be raised, the production tact is improved to achieve cost reduction.

In addition, in a CRT employing the glass panel for the CRT of the present embodiment, the stress distortion layer of the glass panel exceeds 50 µm from the surface, the stress distortion layer is not pierced by an impact applied thereto from outside the CRT, thus achieving sufficient destruction preventative effect.

As a method for verifying the destruction preventative effect, there is an accelerated scarring strength test according to which the surface of an article being tested is uniformly scarred by a #150 and paper. This testing is referred to below as a #150 scarring. By measuring the bending strength, it is possible to confirm the destruction strength when the glass is scarred and subjected to a load.

The glass panel for the CRT of the present embodiment has a bending strength after #150 scarring of not less than 100 MPa, which is equivalent to not less than twice the scarring strength of the non-reinforced glass.

As described above, the glass panel for the CRT of the present embodiment has a stress distortion layer having a thickness exceeding 50 $\mu$m, so that the stress distortion layer is not apt to be pierced by a defect on the glass surface. Thus, the possibility is high that the distal end of the defect lies within the inside of a compression stress layer. Due to this compression stress, the defect is not likely to be extended even on load application from outside, thus realizing a high scarring strength.

The composition of the glass panel for the CRT of the present embodiment is now explained. If $SiO_2$, as a basic glass component, is contained in an amount less than 57%, the thermal coefficient is increased, whilst the chemical durability is worsened. If conversely the content of $SiO_2$ exceeds 64%, melting difficulties are presented. So, in the present embodiment, the content of $SiO_2$ is set to 57% to 64% and preferably to 60% to 62%.

If $Al_2O_3$, as a glass component which improves resistance against devitrification and chemical durability of glass, is contained in an amount less than 0.1%, its effect is nil, whereas, if it is contained in an amount exceeding 4%, the glass is lowered in its thermal expansion coefficient. So, in the present embodiment, the content of $Al_2O_3$ is set to 0.1% to 4% and preferably 0.1% to 2%. By $Al_2O_3$ content, ion exchange can be accelerated to enable the stress distortion layer to be increased in depth.

On the other hand, $Na_2O$ is a glass component which improved melting properties and resistance against browning of glass and which chemically reinforces the glass by ion exchange mainly with K ions in an ion exchange processing bath. If $Na_2O$ is contained in an amount less than 5%, the melting properties are lowered, whereas, if the content of $Na_2O$ exceeds 10%, the resistance against devitrification and chemical resistance are lowered, whilst the thermal expansion coefficient is increased. So, in the present embodiment, the content of $Na_2O$ is made to be 5% to 10% and preferably to 6% to 8%.

$K_2O$ is a glass component which improves melting properties and resistance against browning of glass. If the content of SrO is less than 7%, X-ray absorption coefficient is decreased, whereas, if the content exceeds 10%, the resistance against devitrification and chemical resistance are lowered. So, in the present embodiment, the content of $K_2O$ is made to be 5% to 10% and preferably to 6% to 8%.

SrO is a glass component which improves melting properties of glass and raises its X-ray absorption coefficient. If the content of SrO is less than 7%, the X-ray absorption coefficient is lowered, whereas, if it exceeds 13%, the liquid phase temperature is raised. So, in the present embodiment, the content of SrO is set to 8% to 13% and preferably to 8% to 10%.

BaO is a glass component which improves melting properties of glass and raises its X-ray absorption coefficient. If the content of SrO is less than 7%, the X-ray absorption coefficient is lowered, whereas, if it exceeds 11%, the liquid phase temperature is raised. So, in the present embodiment, the content of BaO is set to 7% to 11% and preferably to 8% to 10%.

$TiO_2$ is a glass component which prohibits glass browning. If the content of $TiO_2$ is less than 0.1%, the effect is nil, whereas, if it exceeds 2%, the glass is deteriorated in resistance against devitrification. So, the content of $TiO_2$ is set to 0.1% to 2.0% and preferably to 0.2% to 1%.

$ZrO_2$ is a glass component which raises its X-ray absorption coefficient while promoting ion exchange to enable formation of a deeper stress distortion layer. If the content of this component is less than 0.1%, its effect is nil, whereas, if the content exceeds 4%, the resistance against devitrification is lowered. So, in the present embodiment, the content of $ZrO_2$ is set to 0.1% to 4% and preferably to 1% to 2%.

MgO, CaO, ZnO and $Sb_2O_3$ is used for improving the melting properties, adjusting the X-ray absorption coefficients and for adjusting the glass viscosity, and as a clarifier, for the glass. The amounts of MgO, CaO and ZnO are preferably less than 3%, whereas that of $Sb_2O_3$ is preferably less than 1%. NiO and $Co_2O_3$ are used for adjusting the transmission factor of the glass. The amount of NiO is preferably less than 0.5%, whilst that of $Co_2O_3$ is preferably less than 0.01%.

If, in the alkali oxides ($Na_2O$ and $K_2O$) in the above composition, the proportion of $Na_2O$ amounts to 65% or more, the glass is lowered in resistance against devitrification or chemical durability, while being increased in thermal expansion coefficient. Moreover, sodium ions in the glass tends to be migrated and, in particular, voltage leakage ascribable to sodium diffusion is likely to occur on a frit sealing surface. So, in the present embodiment, the proportion of $Na_2O$ in the alkali oxides is set to less than 65% and preferably to less than 55%.

It is noted that the glass panel and the funnel, now in favored use, are of the thermal expansion coefficient of 98 to $101 \times 10^{-7}$/°C. If the thermal expansion coefficient of the glass panel is significantly off this range, it ceases to be matched to the thermal expansion coefficient of the funnel, now in favored use, so that the sealed portion in the frit seal between the panel and the funnel tends to be peeled or cracked to render it difficult to realize the frit seal of high reliability. So, in the present embodiment, the thermal expansion coefficient at 30°C to 300°C is set to 95 to $105 \times 10^{-7}$/

°C and preferably to 98 to $101 \times 10^{-7}$/°C.

In the method for producing the glass panel for the CRT of the present embodiment, the following procedure, for example, may be used: First, the glass starting material is weighed to give the composition described above and mixed together to a starting material for blending, which then is charged into a heat-resistant crucible and melted at a temperature of 1400° to 1500°C, stirred and clarified to give a homogeneous melted glass.

The glass then is cast into a molding frame to cast a glass block, or is press-molded to the shape of CRT. The resulting product is transferred to an oven heated to close to the annealing temperature of the glass and is allowed to cool to the ambient temperature. The resulting annealed glass block is sliced and polished.

A panel pin (jig) then is embedded in an inner lateral surface of the glass panel for mounting a color sorting device, such as an aperture grill.

The glass panel is then ion-exchanged in a melted alkali salt. The composition and the processing temperature and time of the melted alkali salt are optionally selected depending on the glass composition. After holding for a preset time, the glass panel is taken out and rinsed. For the glass panel of the present invention, potassium nitrate is preferably used at a preferred processing temperature of 350° to 550°C. The processing time depends on the processing temperature such that the lower the processing temperature, the longer is the time needed. The processing time for realizing a deep stress distortion layer is preferably not less than four hours and more preferably not less than ten hours.

With the above-described glass panel for a CRT, chemically reinforced by ion exchange, the panel surface can be reinforced after mounting the panel pin at the outset, so that it is possible to prevent the stress distortion layer on the panel surface from becoming relaxed due to heating at the time of mounting the panel pin.

The thickness of the stress distortion layer obtained by ion exchange can be found by the Babinet compensation method employing a precision strain gauge or by a method employing a polarization microscope. If the polarization microscope is used, a glass sample is sliced substantially at right angles to the ion-exchange surface and polished to a thin thickness so that its cross-section is 0.5 mm or less. Then, a light beam is caused to fall at right angles to the polished surface by the polarization microscope and observation is made using a crossed Nicol. In the reinforced glass, since a distortion layer is formed near its surface, the thickness of the stress distortion layer can be measured by measuring the distance from the surface of an area changed in lightness or in color.

The use of the Babinet compensator in stress measurement is described e.g., in the Glass Engineering Handbook, edited by Masayuki Yamane et al., issued by Asakura Shoten on July 5, 1999, first edition, Vol.1. The aforementioned sample, polished to a thin thickness of 0.5 mm or less, is observed by a Babinet compensator, and the distance from the glass surface of a point of intersection of the center of a reference fringe and the center of a fringe meandering on the glass surface is measured to measure the thickness of the stress distortion layer.

The difference between the chemically reinforced glass and the physically reinforced glass can be recognized on scrutinizing the distribution of metal ions contained in the vicinity of the glass panel surface. That is, the depth distribution of metal ions having a larger ion radius, such as alkali metal ions, and those having a smaller ion radius, such as alkali metal ions, is checked.

That is, if (density of metal ions with a larger ion radius)/(density of metal ions with a smaller ion radius) is larger in a portion near the surface of the glass than in a bulk portion of the glass, for example, a portion of the glass about one half the glass thickness, and the bending strength is in a range defined in the present embodiment, it may be seen that chemical reinforcement by ion exchange has been achieved.

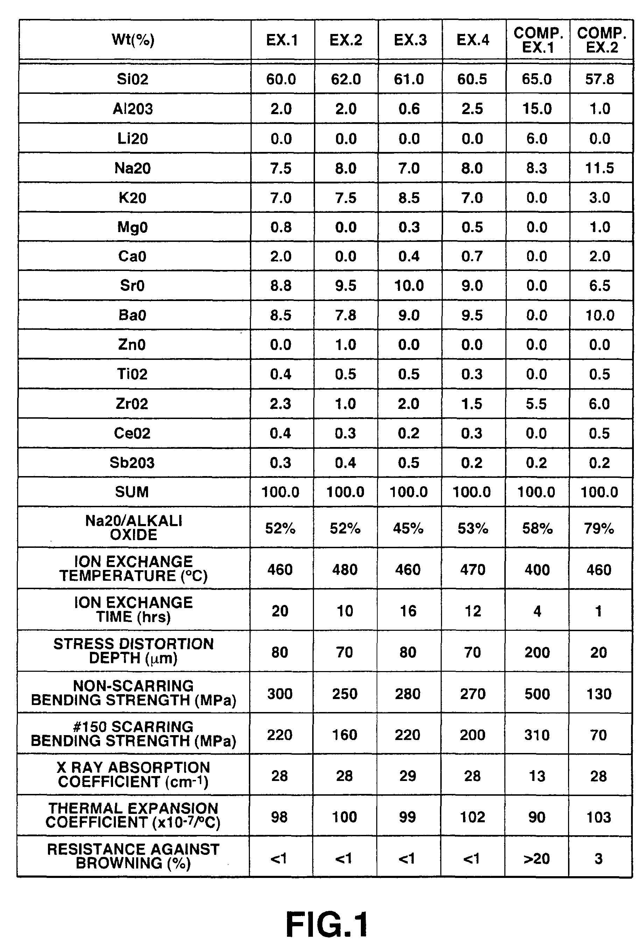

Several Examples for the glass panel for the CRT according to the present invention and Comparative Examples are now explained. Fig.1 illustrates the Examples 1 to 4 of the present invention and Comparative Examples 1 and 2.

Examples 1 to 4

Various starting materials, namely oxides, hydroxides, carbonates, nitrates, chlorides and sulfates were weighed to give respective compositions of Examples 1 to 4 shown in Fig.1 and mixed together to a starting material for blending, which then was charged into a heat-resistant vessel, such as a crucible of platinum for heating at 1300° to 1500°C for melting, stirring, homogenizing and clarification. The resulting mass then was cast into a mold. From the resulting glass block, a double-side polishing sample $65 \times 10 \times 1$ mm in size was prepared and subjected to ion exchange, in which the aforementioned glass sample was immersed for a pre-set time in the glass sample in a melted salt, holding $KNO_3$ at 360° to 420°C, and the glass sample then was taken out and rinsed. Fig.1 shows the compositions of the various Examples and measured data.

For measuring the thickness of the stress distortion layer, the glass sample was cut substantially at right angles to the ion exchange surface of the glass sample, and the cross-section was polished to a thin thickness not larger than 0.5 mm. As polarized light was illuminated at right angles to the polished surface, with a polarization microscope, and the polished surface was observed with a crossed Nicol to find the distance from the surface.

For confirming that no difference is produced with different measurement methods, measurement was also conducted by the Babinet compensator method. Specifically, using the Babinet compensator method, measurement was made of the thickness of the distortion layer of a sample ground to a thin thickness not larger than 0.5 mm.

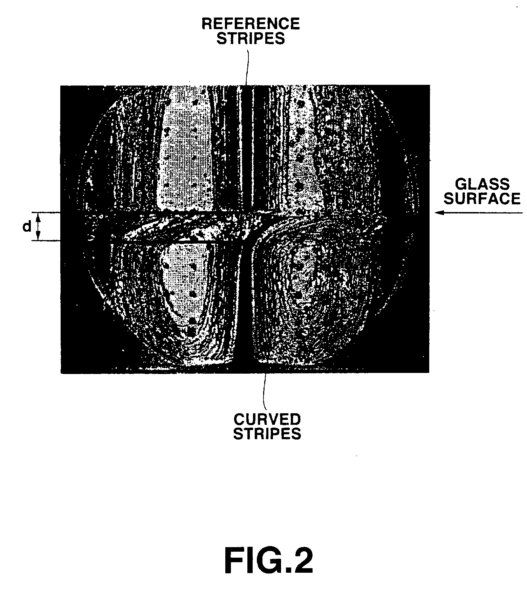

Fig.2 shows the observed results by the Babinet compensation method of Example 1. A distance d from the glass surface of a point of intersection of the center of a reference fringe and the center of a fringe meandering on the glass surface is measured to measure the thickness of the stress distortion layer. The thickness of the distortion layer as found by the Babinet compensation method was about the same as that obtained by the polarization microscope method.

The X-rat absorption coefficient was calculated based on the transmitted dose at a position 50 mm spaced from the opposite glass surface as X-rays with a wavelength of 0.06 nm was illuminated on the prepared glass sample.

The thermal expansion coefficient was measured by a thermo-mechanical analyzer (TMA) to calculate the average line expansion coefficient in a temperature range of 30°C to 300°C.

The bending strength was measured in accordance with a three-point bending test of JIS-R1601 with the sample shape of $65 \times 10 \times 1$ mm as described above, and calculations were used to find the bending strength value. As for the scarring strength, one side of the aforementioned sample following chemical reinforcement was scarred evenly with a #150 and paper and a load was applied such as to apply a tensile stress on this surface to measure the bending strength.

The value of the resistance to browning was found by the following equation:

$$\text{Resistance to browning} = \text{transmission factor before irradiation} - \text{transmission factor after irradiation}$$

wherein the transmission factor before irradiation and the transmission factor after irradiation were found by illuminating electron rays at 21 kV and a current density of $0.9\mu m$ for 120 minutes and by measuring changes in the transmission factor at the wavelength of 400 nm before and after illumination.

The glass samples of Examples 1 to 4, having the X-ray absorption coefficient as found as a glass panel for a CRT of not higher than 28 cm$^{-1}$ and a thermal expansion coefficient of 98 to $100 \times 10^{-7}/°C$, while being free from discoloration due to browning, are of a thickness of the stress distortion layer of not less than 70 $\mu m$, a bending strength on the non-scarred state of not less than 250 MPa and a bending strength on #150 scarring of not less than 100 MPa. So, by using this glass, it is possible to reduce the thickness of the glass panel for a CRT while maintaining the usual pressure resistance properties.

Comparative Example 1

The Comparative Example 1 is equivalent to an embodiment of the Japanese Patent, A glass sample was prepared to give the composition shown in Comparative Example 1 of Fig.1 to effect ion exchange. For this ion exchange, the aforementioned glass sample was immersed for four hours in a processing bath of a mixed salt of NaNO$_3$ (40%) + KNO$_3$ (60%), kept at 400°C, and then was taken out therefrom and rinsed. The various measurement methods are the same as those of the Examples described above.

The glass sample of the Comparative Example 1, having values of the thickness of the stress distortion layer and the bending strength sufficient for the glass panel for the CRT, is devoid of X-ray absorption coefficient or resistance against browning indispensable for the glass panel for the CRT. So, the glass of the Comparative Example 1 is not suited as a glass panel for the CRT.

Comparative Example 2

The Comparative Example 2 is equivalent to an embodiment of the Japanese Laying-Open Patent H-7-42140. A glass sample was prepared to give the composition shown in Comparative Example 2 of Fig.1 to effect ion exchange. For this ion exchange, the aforementioned glass sample was immersed for one hour in a processing bath of KNO$_3$, kept at 460°C, and then was taken out therefrom and rinsed. The various measurement methods are the same as those of the Examples described above.

The glass sample of the Comparative Example 1, exhibiting X-ray absorption coefficient and resistance against browning as required for the glass panel for the CRT, is thin in thickness of the stress distortion layer and insufficient in bending strength. So, with the use of this glass, it is difficult to reduce the thickness of the glass panel for CRT.

The difference between the Examples of the invention and respective Comparative Examples is now explained.

Difference between the Examples and the respective Comparative Example 1 (Japanese Patent 2837005)

The glass of the Comparative Example 1 (Japanese Patent 2837005) is sufficient as a glass panel for a CRT as to the thickness of the stress distortion layer and the bending strength, however, it is devoid of satisfactory X-ray absorption coefficient or resistance against browning.

That is, $SiO_2$, as a basic component of the glass, contained in each glass, is also a component which lowers the X-ray absorption coefficient. Therefore, it is not suited as a glass panel for the CRT. In the present Example, a sufficient X-ray absorption coefficient is achieved by the $SiO_2$ content being 57 to 64%.

On the other hand, $Al_2O_3$, as a component which lowers the chemical durability and ion exchange efficiency, is simultaneously a component which lowers the X-ray absorption coefficient. The Comparative Example 1, containing 5 to 15% of $Al_2O_3$, is low in X-ray absorption coefficient and hence is not suited as a glass panel for the CRT. In the Examples of the invention, the content of $Al_2O_3$ is set to 1% to 4% to realize a high X-ray absorption coefficient.

$Li_2O$ is used in the Comparative Example 1 as a component which improves the melting properties of the glass and which, by ion exchange mainly with Na ions in an ion exchange processing bath on the superficial area of the glass. However, since $Li_2O$ is a component which significantly lowers the X-ray absorption coefficient, the X-ray absorption coefficient is low in Comparative Example 1. In the Examples of the present invention, $K_2O$ having stronger effects in improving the X-ray absorption coefficient is contained for improving melting properties of the glass.

$Na_2O$ is a component which improves melting properties of the glass and which chemically reinforces the glass by ion exchange mainly with K ions in the ion exchange processing bath on the superficial glass area. $Na_2O$ is contained in the glass of the Examples and Comparative Example.

$K_2O$ is a component which improves melting properties and raises the X-ray absorption coefficient of the glass. The Comparative Example 1, devoid of this component, is susceptible to glass discoloration due to browning. Conversely, the Examples of the present invention containing 5% to 10% of $K_2O$, are not susceptible to discoloration due to browning.

SrO is a component which improves the melting properties and raises the X-ray absorption coefficient of the glass. This component, contained in the Examples of the present invention, is not contained in the Comparative Example 1.

BaO is also a component which improves the melting properties and raises the X-ray absorption coefficient of the glass. This component, contained in the Examples of the present invention, is not contained in the Comparative Example 1.

$TiO_2$ is a component which prohibits glass browning. This component, contained in the Examples of the present invention, is not contained in the Comparative Example 1.

$ZrO_2$ is a component which improves chemical durability and simultaneously raises X-ray absorption coefficient and the ion exchange efficiency. However, it is also a component which is scarcely soluble in glass and moreover lowers the resistance of the glass against devitrification. The Comparative Example 1, containing 5% to 15% of $ZrO_2$, suffers from the problem of devitrification and insufficient dissolution.

MgO, CaO, ZnO and $Sb_2O_3$ are not essential for the two, however, the components may be used for improving melting properties of the glass and for adjusting the X-ray absorption coefficient and the glass viscosity and also as a clarifier.

It is seen from above that the glass sample of Comparative Example 1, having sufficient values of the thickness of the stress distortion layer and bending strength, for use as a glass panel for a CRT, is devoid of sufficient X-ray absorption coefficient or resistance against browning, and hence is not suited as the glass panel for the CRT. Difference between the Examples of the Present Invention and Comparative Example 2 (Japanese Patent Publication H-7-42140)

The glass of Comparative Example 2 (Japanese Patent Publication H-7-42140) contains much $Na_2O$ to decrease the content of $K_2O$ in the glass matrix to lower the cost for starting materials and to eke out melting properties. However, this worsens discoloration due to browning. So, $Na_2O$ and $K_2O$ are made to co-exist by ion exchanging the layers of 2 to 5 μm from the surface and the stress distortion layer is formed on the surface to obstruct intrusion of electron rays to improve resistance against browning. The Comparative Example 2 thus differs from the Examples of the present invention which reduces the thickness and the weight of the glass panel for the CRT by the thick stress distortion layer and a high bending strength.

In the Comparative Example 2, in which there is a statement pertinent to distribution along the depth of the ion-exchanged component, there lacks the statement pertinent to the thickness of the stress distortion layer. However, since it is stated in the Comparative Example 2 that an intrusion depth of an electron ray of 10 μm at most would be sufficient, it may be said that a larger thickness of the stress distortion layer is unnecessary.

Although the Comparative Example lacks definite limitation of the glass composition, it is stated therein that $Na_2O$ accounts for 65% or more of the total amount of alkali oxides. If the $Na_2O$ content is high, melting properties and moldability are improved, however, the glass is lowered in resistance against devitrification or chemical durability while being increased in thermal expansion coefficient. Judging from the statement in the Japanese Patent Publication H-7-42140, it is intended that the content of $K_2O$ is at least less than 7.5% and preferably on the order of 3%.

As stated in the Examples of the Japanese Patent Publication H-7-42140 Comparative Example 2 for sample No.2, the glass of the Comparative Example 2 is extremely low in the resistance against browning of the glass matrix itself. So, in the Comparative Example 2, the browning is prohibited by judiciously selecting the proportion of $Na_2O$ and $K_2O$ in the ion exchange layer on the reverse glass surface. The result is that limitations are imposed on the ion exchange depth such that a sufficient depth of the stress distortion layer cannot be achieved.

Moreover, sodium ions are liable to be migrated in the glass of Comparative Example 2. In particular, voltage leakage is liable to be produced due to sodium diffusion on the frit sealing surface. This phenomenon is most likely to be manifested in particular when the glass is subjected to a durability test continuing for over 3000 hours.

It is seen from above that the glass of Comparative Example 2, while satisfying the properties for a CRT insofar as the X-ray absorption coefficient and the resistance against browning are concerned, is not sufficient as to the depth of the stress distortion layer. That is, since the stress distortion layer is insufficient in depth, the bending strength following scarring is only small such that the glass cannot be used as a panel for a CRT.

The glass sample of the present embodiment, in which the amounts of $Na_2O$ and $K_2O$ are both 5% to 10%, is less susceptible to discoloration due to browning of the glass substrate itself, and has a thick stress distortion layer because there is no constraint imposed as to the ion exchange efficiency. Moreover, the glass sample of the present embodiment has a high bending strength. So, a glass panel for a CRT which is thin in thickness and lightweight may be realized with the use of the present glass panel.

**Claims**

1. A glass panel for a cathode ray tube produced on chemically reinforcing glass containing 57 to 64 wt% of $SiO_2$, 0.1 to 4 wt% of $Al_2O_3$, 5 to 10 wt% of $Na_2O$, 5 to 10 wt% of $K_2O$, 7 to 13 wt% of SrO, 7 to 11 wt% of BaO, 0.1 to 2 wt% of $TiO_2$, 0.1 to 4 wt% of $ZrO_2$ and 0.01 to 1 wt% of $CeO_2$.

2. The glass panel for a cathode ray tube according to the claim 1 wherein a stress distortion layer is formed on a surface of the glass by ion exchange.

3. The glass panel for a cathode ray tube according to the claim 2 wherein said stress distortion layer reaches a depth exceeding 50 $\mu$m from the surface.

4. The glass panel for a cathode ray tube according to any one of claims 1 to 3 wherein the weight content ratio of said $Na_2O$ and $K_2O$ is $0.65 > Na_2O/(Na_2O + K_2O)$.

5. A glass panel for a cathode ray tube containing, in addition to the components of the glass panel for a cathode ray tube according to any one of claims 1 to 4, at least one oxide selected from the group consisting of MgO, CaO, ZnO, $Sb_2O_3$, NiO and $Co_2O_3$.

6. The glass panel for a cathode ray tube according to any one of claims 1 to 5 wherein the bending strength is not less than 200 MPa.

7. The glass panel for a cathode ray tube according to any one of claims 1 to 5 wherein the bending strength on injury by a #150 and paper is not less than 100 MPa.

8. The glass panel for a cathode ray tube according to any one of claims 1 to 7 wherein the thermal expansion coefficient at 30 to 300°C is 95 to 105 x $10^{-7}$/ °C.

9. A cathode ray tube employing a glass panel for a cathode ray tube according to any one of claims 1 to 8.

10. A method for producing a cathode ray tube comprising the steps of:

   constructing a glass panel for a cathode ray tube;
   mounting a jig for mounting an internal member on said glass panel and subsequently chemically reinforcing the glass panel.

11. The method for producing a cathode ray tube according to claim 10 wherein the glass panel for a cathode ray tube is produced on chemically reinforcing glass containing 57 to 64 wt% of $SiO_2$, 0.1 to 4 wt% of $Al_2O_3$, 5 to 10 wt%

of $Na_2O$, 5 to 10 wt% of $K_2O$, 7 to13 wt% of SrO, 7 to 11 wt% of BaO, 0.1 to 2 wt% of $TiO_2$, 0.1 to 4 wt% of $ZrO_2$ and 0.01 to 1 wt% of $CeO_2$.

**12.** The method for producing a cathode ray tube according to claim 10 wherein said glass panel for a cathode ray tube is chemically reinforced by ion exchange.

| Wt(%) | EX.1 | EX.2 | EX.3 | EX.4 | COMP. EX.1 | COMP. EX.2 |
|---|---|---|---|---|---|---|
| SiO2 | 60.0 | 62.0 | 61.0 | 60.5 | 65.0 | 57.8 |
| Al2O3 | 2.0 | 2.0 | 0.6 | 2.5 | 15.0 | 1.0 |
| Li2O | 0.0 | 0.0 | 0.0 | 0.0 | 6.0 | 0.0 |
| Na2O | 7.5 | 8.0 | 7.0 | 8.0 | 8.3 | 11.5 |
| K2O | 7.0 | 7.5 | 8.5 | 7.0 | 0.0 | 3.0 |
| MgO | 0.8 | 0.0 | 0.3 | 0.5 | 0.0 | 1.0 |
| CaO | 2.0 | 0.0 | 0.4 | 0.7 | 0.0 | 2.0 |
| SrO | 8.8 | 9.5 | 10.0 | 9.0 | 0.0 | 6.5 |
| BaO | 8.5 | 7.8 | 9.0 | 9.5 | 0.0 | 10.0 |
| ZnO | 0.0 | 1.0 | 0.0 | 0.0 | 0.0 | 0.0 |
| TiO2 | 0.4 | 0.5 | 0.5 | 0.3 | 0.0 | 0.5 |
| ZrO2 | 2.3 | 1.0 | 2.0 | 1.5 | 5.5 | 6.0 |
| CeO2 | 0.4 | 0.3 | 0.2 | 0.3 | 0.0 | 0.5 |
| Sb2O3 | 0.3 | 0.4 | 0.5 | 0.2 | 0.2 | 0.2 |
| SUM | 100.0 | 100.0 | 100.0 | 100.0 | 100.0 | 100.0 |
| Na2O/ALKALI OXIDE | 52% | 52% | 45% | 53% | 58% | 79% |
| ION EXCHANGE TEMPERATURE (°C) | 460 | 480 | 460 | 470 | 400 | 460 |
| ION EXCHANGE TIME (hrs) | 20 | 10 | 16 | 12 | 4 | 1 |
| STRESS DISTORTION DEPTH (μm) | 80 | 70 | 80 | 70 | 200 | 20 |
| NON-SCARRING BENDING STRENGTH (MPa) | 300 | 250 | 280 | 270 | 500 | 130 |
| #150 SCARRING BENDING STRENGTH (MPa) | 220 | 160 | 220 | 200 | 310 | 70 |
| X RAY ABSORPTION COEFFICIENT (cm$^{-1}$) | 28 | 28 | 29 | 28 | 13 | 28 |
| THERMAL EXPANSION COEFFICIENT (x10$^{-7}$/°C) | 98 | 100 | 99 | 102 | 90 | 103 |
| RESISTANCE AGAINST BROWNING (%) | <1 | <1 | <1 | <1 | >20 | 3 |

# FIG.1

REFERENCE
STRIPES

GLASS
SURFACE

d

CURVED
STRIPES

# FIG.2

**European Patent Office**

# EUROPEAN SEARCH REPORT

Application Number

EP 01 30 1153

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 4 897 371 A (SUZUKI KOUICHI ET AL) 30 January 1990 (1990-01-30) * claim 1 * | 1-12 | C03C3/095 C03C21/00 |
| Y | EP 0 592 237 A (PILKINGTON PLC) 13 April 1994 (1994-04-13) * page 6, line 55 - line 56; claims 1-14 * | 1-12 | |
| A | DATABASE WPI Section Ch, Week 198804 Derwent Publications Ltd., London, GB; Class L01, AN 1988-026243 XP002170784 & JP 62 288134 A (NIPPON ELECTRIC GLASS CO), 15 December 1987 (1987-12-15) * abstract * | 4 | |
| A | US 4 337 410 A (VAN DER GEER JOSEPHUS J ET AL) 29 June 1982 (1982-06-29) * the whole document * | 1-12 | |
| A | EP 0 791 563 A (NIPPON SHEET GLASS CO LTD) 27 August 1997 (1997-08-27) * claims 1,4 * | 1 | TECHNICAL FIELDS SEARCHED (Int.Cl.7) C03C |
| A | EP 0 131 399 A (CORNING GLASS WORKS) 16 January 1985 (1985-01-16) * the whole document * | 1-12 | |
| A | US 5 846 280 A (SPEIT BURKHARD) 8 December 1998 (1998-12-08) * table 4 * | 1-12 | |

The present search report has been drawn up for all claims

| Place of search | Date of completion of the search | Examiner |
|---|---|---|
| THE HAGUE | 28 June 2001 | Reedijk, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 125 900 A1

## ANNEX TO THE EUROPEAN SEARCH REPORT
## ON EUROPEAN PATENT APPLICATION NO.

EP 01 30 1153

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2001

| Patent document cited in search report | | Publication date | Patent family member(s) | | Publication date |
|---|---|---|---|---|---|
| US 4897371 | A | 30-01-1990 | JP | 2066177 C | 24-06-1996 |
| | | | JP | 7108797 B | 22-11-1995 |
| | | | JP | 63190744 A | 08-08-1988 |
| | | | JP | 2060463 C | 10-06-1996 |
| | | | JP | 7102981 B | 08-11-1995 |
| | | | JP | 63195146 A | 12-08-1988 |
| | | | JP | 1083539 A | 29-03-1989 |
| | | | JP | 1966865 C | 18-09-1995 |
| | | | JP | 6104580 B | 21-12-1994 |
| | | | JP | 1083540 A | 29-03-1989 |
| | | | JP | 1966866 C | 18-09-1995 |
| | | | JP | 6104581 B | 21-12-1994 |
| | | | DE | 3803191 A | 11-08-1988 |
| | | | DE | 3844882 C | 25-09-1997 |
| | | | DE | 3844883 C | 12-02-1998 |
| | | | EP | 0791563 A | 27-08-1997 |
| | | | FR | 2610317 A | 05-08-1988 |
| | | | GB | 2200627 A,B | 10-08-1988 |
| | | | GB | 2236316 A,B | 03-04-1991 |
| | | | GB | 2236317 A,B | 03-04-1991 |
| | | | US | 5057134 A | 15-10-1991 |
| | | | US | 5296294 A | 22-03-1994 |
| EP 0592237 | A | 13-04-1994 | CA | 2107946 A | 10-04-1994 |
| | | | JP | 6256027 A | 13-09-1994 |
| | | | MX | 9306262 A | 29-04-1994 |
| JP 62288134 | A | 15-12-1987 | NONE | | |
| US 4337410 | A | 29-06-1982 | NL | 7906579 A | 05-03-1981 |
| | | | AT | 368984 B | 25-11-1982 |
| | | | AT | 440080 A | 15-04-1982 |
| | | | AU | 538379 B | 09-08-1984 |
| | | | AU | 6192180 A | 12-03-1981 |
| | | | BE | 885023 A | 02-03-1981 |
| | | | BE | 885024 A | 02-03-1981 |
| | | | BR | 8005554 A | 17-03-1981 |
| | | | CA | 1144184 A | 05-04-1983 |
| | | | DE | 3032771 A | 19-03-1981 |
| | | | FR | 2464238 A | 06-03-1981 |
| | | | GB | 2057422 A,B | 01-04-1981 |
| | | | IT | 1132596 B | 02-07-1986 |
| | | | JP | 1330853 C | 14-08-1986 |
| | | | JP | 56037248 A | 10-04-1981 |
| | | | JP | 59027729 B | 07-07-1984 |
| | | | SE | 447372 B | 10-11-1986 |

EPO FORM P0459

For more details about this annex : see Official Journal of the European Patent Office, No. 12/82

14

**ANNEX TO THE EUROPEAN SEARCH REPORT
ON EUROPEAN PATENT APPLICATION NO.**

EP 01 30 1153

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2001

| Patent document cited in search report | | Publication date | Patent family member(s) | | Publication date |
|---|---|---|---|---|---|
| US 4337410 | A | | SE | 8006074 A | 04-03-1981 |
| EP 0791563 | A | 27-08-1997 | JP | 2066177 C | 24-06-1996 |
| | | | JP | 7108797 B | 22-11-1995 |
| | | | JP | 63190744 A | 08-08-1988 |
| | | | US | 5296294 A | 22-03-1994 |
| | | | DE | 3803191 A | 11-08-1988 |
| | | | DE | 3844882 C | 25-09-1997 |
| | | | DE | 3844883 C | 12-02-1998 |
| | | | FR | 2610317 A | 05-08-1988 |
| | | | GB | 2200627 A,B | 10-08-1988 |
| | | | GB | 2236316 A,B | 03-04-1991 |
| | | | GB | 2236317 A,B | 03-04-1991 |
| | | | US | 4897371 A | 30-01-1990 |
| | | | US | 5057134 A | 15-10-1991 |
| | | | DE | 69317382 D | 16-04-1998 |
| | | | DE | 69317382 T | 13-08-1998 |
| | | | DE | 69328695 D | 21-06-2000 |
| | | | DE | 69328695 T | 16-11-2000 |
| | | | EP | 0604094 A | 29-06-1994 |
| EP 0131399 | A | 16-01-1985 | DE | 3462876 D | 07-05-1987 |
| | | | JP | 60021831 A | 04-02-1985 |
| | | | KR | 9109179 B | 04-11-1991 |
| US 5846280 | A | 08-12-1998 | DE | 19616679 C | 07-05-1997 |
| | | | JP | 10067537 A | 10-03-1998 |

EPO FORM P0459

For more details about this annex : see Official Journal of the European Patent Office, No. 12/82